(19) Europäisches Patentamt / European Patent Office / Office européen des brevets

(11) **EP 3 885 724 A1**

(12) **EUROPEAN PATENT APPLICATION**
published in accordance with Art. 153(4) EPC

(43) Date of publication:
**29.09.2021 Bulletin 2021/39**

(51) Int Cl.:
*G01J 5/00* *(2006.01)*     *G01J 5/60* *(2006.01)*

(21) Application number: **19887665.8**

(22) Date of filing: **13.09.2019**

(86) International application number:
**PCT/JP2019/036129**

(87) International publication number:
**WO 2020/105255 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.11.2018 JP 2018217841**

(71) Applicant: **JFE Steel Corporation**
**Tokyo 100-0011 (JP)**

(72) Inventor: **KEMMOCHI, Mitsutoshi**
**Tokyo 100-0011 (JP)**

(74) Representative: **Hoffmann Eitle**
**Patent- und Rechtsanwälte PartmbB**
**Arabellastraße 30**
**81925 München (DE)**

(54) **TEMPERATURE MEASUREMENT DEVICE CALIBRATION METHOD, TEMPERATURE MEASUREMENT DEVICE CALIBRATION DEVICE, PHYSICAL QUANTITY MEASUREMENT DEVICE CALIBRATION METHOD, AND PHYSICAL QUANTITY MEASUREMENT DEVICE CALIBRATION DEVICE**

(57) A calibration method for a temperature measurement device according to the present invention includes steps of: measuring dispersed spectrum information of radiation energy from a black body furnace and dark current data with a temperature measurement device before swapping and with a temperature measurement device after swapping, at each of a plurality of different temperatures; generating, using information thus measured, a temperature measurement to be measured by a contact thermometer included in the temperature measurement device after swapping, and dispersed spectrum information corresponding to the temperature measurement, from a temperature measurement measured by a contact thermometer included in the temperature measurement device before swapping, and dispersed spectrum information corresponding to the temperature measurement; and determining, using information thus generated, a basis spectrum and a calibration line for the temperature measurement device after swapping.

# FIG.18

**Description**

Field

The present invention relates to a calibration method for a temperature measurement device configured to measure a surface temperature of a target object by measuring a radiation energy emitted from the target object using spectroscopy, and by applying signal processing to dispersed spectrum information thus acquired, and also relates to a calibration device for such a temperature measurement device, a calibration method for a physical quantity measurement device, and a calibration device for a physical quantity measurement device.

Background

There is a wide range of technologies for measuring a temperature of a target object. Among such technologies, a radiation temperature measurement technology is a technology that measures a surface temperature of a target object contactlessly by taking advantage of radiation light emitted from the target object, and has been commercialized as a radiation thermometer. Such a radiation thermometer includes a photoelectric transducer and an optical filter, and measures the surface temperature of the target object by measuring radiation energy from the target object within a predetermined wavelength range, and converting the measurement of the radiation energy into a temperature. To measure the surface temperature of a target object using a radiation thermometer, emissivity of the target object is needed, because the radiation energy of the target object is a result of multiplying the emissivity of the target object to the radiation energy emitted from an ideal black body. However, the emissivity of the target object varies depending on the condition of the target object, and an error in the temperature measurement becomes increased as the emissivity of the target object varies over time.
Based on this background, Patent Literatures 1 to 3 disclose technologies for enabling a highly accurate measurement of the target object temperature, without being affected by emissivity variations. Specifically, Patent Literature 1 discloses a technology that factorizes dispersed spectrum information into basis spectra, calculating scores for the basis spectra as coefficients, and calculating the surface temperature of the target object using the coefficients, with a calibration line having been calculated in advance. Furthermore, Patent Literature 2 discloses a technology with which basis spectra and a calibration line are determined in advance based on temperature measurements of a target object measured with a contact thermometer, and the surface temperature of the target object is calculated using the scores corresponding to the basis spectra, and the calibration line. Furthermore, Patent Literature 3 discloses a technology that factorizes dispersed spectrum information into basis spectra, and that calculates surface temperatures of the target object using coefficients that are to be multiplied to the basis spectra.

Citation List

Patent Literature

Patent Literature 1: Japanese Patent Application Laid-open No. 2013-234984
Patent Literature 2: Japanese Patent Application Laid-open No. 2013-221788
Patent Literature 3: Japanese Patent Application Laid-open No. 2014-169935

Summary

Technical Problem

However, with the technologies disclosed in Patent Literatures 1 to 3, before measuring a surface temperature of a target object, it is necessary to determine the basis spectra, the coefficients, and the calibration line using some kind of technique. Therefore, when an existing temperature measurement device is to be swapped with a new temperature measurement device, it is necessary to perform adjustments such as determination of the spectra, measurements of the temperatures using a contact thermometer, and measurements of the dispersed spectra of a heated sample under various conditions, all of which are possible sources of an error. Furthermore, in order to make highly accurate temperature measurements, it is necessary to carry out experiments many times. Therefore, an enormous amount of efforts and time is required. Furthermore, depending on the target objects, there are some target objects that cannot be subjected to such experiments.
The present invention is made in consideration of the above described issues, and an object of the present invention is to provide a calibration method for a temperature measurement device, a calibration device for a temperature measurement device, a calibration method for a physical quantity measurement device, and a calibration device for a physical quantity measurement device, the calibration methods and device being capable of reducing the time and the efforts required in adjustments when the device is swapped.

Solution to Problem

To solve the problem and achieve the object, a calibration method according to the present invention for a temperature measurement device, the temperature measurement device being configured to measure a surface temperature of a target object by measuring radiation energy emitted from the target object using spectroscopy and applying signal processing to dispersed spectrum information thus acquired, where the surface temperature is measured by calculating a score of a basis spectrum acquired in advance based on the dispersed spectrum information acquired from the target object, and using the score with a calibration line acquired in advance, and the basis spectrum and the calibration line are determined based on a temperature measurement value that is a resultant of measuring the target object with a contact thermometer. The calibration method includes steps of: measuring dispersed spectrum information of radiation energy from a black body furnace and dark current data with a temperature measurement device before swapping and with a temperature measurement device after swapping, at each of a plurality of different temperatures; generating, using information thus measured, a temperature measurement value to be measured by a contact thermometer included in the temperature measurement device after swapping, and dispersed spectrum information corresponding to the temperature measurement value, from a temperature measurement value measured by a contact thermometer included in the temperature measurement device before swapping and dispersed spectrum information corresponding to the temperature measurement value; and determining, using the information thus generated, the basis spectrum and the calibration line for the temperature measurement device after swapping.

Moreover, in the calibration method according to the present invention for a temperature measurement device, the basis spectrum is determined: by calculating emissivity from a ratio of the dispersed spectrum information of the target object with respect to dispersed spectrum information of radiation energy acquired by making a measurement of the black body furnace at a same temperature as the temperature measurement value measured by the contact thermometer, and determining a spectrum perpendicularly intersecting with a principal component resultant of performing principal component analysis on an emissivity variation that is based on the emissivity, as the basis spectrum; or by applying partial least squares regression to the dispersed spectrum information of the target object and to the temperature measurement value measured by the contact thermometer.

Moreover, a calibration device according to the present invention for a temperature measurement device, the temperature measurement device being configured to measure a surface temperature of a target object by measuring radiation energy emitted from the target object using spectroscopy and by applying signal processing to dispersed spectrum information thus acquired, where the surface temperature is measured by calculating a score of a basis spectrum acquired in advance based on the dispersed spectrum information acquired from the target object and using the score with a calibration line acquired in advance, and the basis spectrum and the calibration line are determined based on a temperature measurement value that is a resultant of measuring the target object with a contact thermometer. The calibration device includes a unit configured to: generate a temperature measurement value to be measured by a contact thermometer included in a temperature measurement device after swapping, and dispersed spectrum information corresponding to the temperature measurement value, from a temperature measurement value measured by a contact thermometer included in a temperature measurement device before swapping and dispersed spectrum information corresponding to the temperature measurement value, using dispersed spectrum information of radiation energy from a black body furnace and dark current data measured with the temperature measurement device before swapping and with the temperature measurement device after swapping, at each of a plurality of different temperatures; and determine, using information thus generated, the basis spectrum and the calibration line for the temperature measurement device after swapping.

Moreover, in the calibration device according to the present invention for a temperature measurement device, the basis spectrum is determined: by calculating emissivity from a ratio of the dispersed spectrum information of the target object with respect to dispersed spectrum information of radiation energy acquired by making a measurement of the black body furnace at a same temperature as the temperature measurement value measured by the contact thermometer, and determining a spectrum perpendicularly intersecting with a principal component resultant of performing principal component analysis on an emissivity variation that is based on the emissivity, as the basis spectrum; or by applying partial least squares regression to the dispersed spectrum information of the target object, and to the temperature measurement value measured by the contact thermometer.

Moreover, a calibration method according to the present invention for a physical quantity measurement device, the physical quantity measurement device being configured to measure a physical quantity of a target object by measuring radiation energy emitted from the target object using spectroscopy and applying signal processing to dispersed spectrum information thus acquired, where the physical quantity is measured by calculating a score of a basis spectrum acquired in advance based on the dispersed spectrum information acquired from the target object, and using the score with a calibration line acquired in advance, and the basis spectrum and the calibration line are determined based on a physical quantity measurement value of the target object that is measured with another method. The calibration method includes steps of: measuring dispersed spectrum information of a target object serving as a reference of calibration and dark current data with a physical quantity measurement device before swapping and with a swapping physical quantity measurement device after swapping, at each of a plurality of different physical quantities; generating, using information thus measured, a physical quantity measurement value and dispersed spectrum information corresponding to the physical quantity measurement value for the physical quantity measurement device after swapping, from a physical quantity measurement value measured by the physical quantity measurement device before swapping and dispersed spectrum information corresponding to the physical quantity measurement value; and determining, using information thus generated, the basis spectrum and the calibration line for the physical quantity measurement device after swapping.

Moreover, in the calibration method according to the present invention for a physical quantity measurement device, the basis spectrum is determined: by determining a spectrum perpendicularly intersecting with a principal component resultant of performing principal component analysis on the dispersed spectrum information of the target object, on the physical quantity measurement value, and on dispersed spectrum information of the object serving as a reference of calibration, as the basis spectrum; or by applying partial least squares regression to the dispersed spectrum information of the target object, and to the physical quantity measurement value.

Moreover, a calibration device according to the present invention for a physical quantity measurement device, the physical quantity measurement device being configured to measure a physical quantity of a target object by measuring radiation energy emitted from the target object using spectroscopy and applying signal processing to dispersed spectrum information thus acquired, where the physical quantity is measured by calculating a score of a basis spectrum acquired in advance based on the dispersed spectrum information acquired from the target object, and using the score with a calibration line acquired in advance, and the basis spectrum and the calibration line are determined based on a physical quantity measurement value of the target object that is measured with another method. The calibration device includes a unit configured to: measure dispersed spectrum information of a target object serving as a reference of calibration and dark current data with a physical quantity measurement device before swapping and with a physical quantity measurement device after swapping, at each of a plurality of different physical quantities; generate, using information thus measured, a physical quantity measurement value and dispersed spectrum information corresponding to the physical quantity measurement value for the swapping physical quantity measurement device after swapping, from a physical quantity measurement value measured by the physical quantity measurement device before swapping, and dispersed spectrum information corresponding to the physical quantity measurement value; and determine, using information thus generated, the basis spectrum and the calibration line for the physical quantity measurement device after swapping.

Moreover, in the calibration device according to the present invention for a physical quantity measurement device, the basis spectrum is determined: by determining a spectrum perpendicularly intersecting with a principal component resultant of performing principal component analysis on the dispersed spectrum information of the target object, on the physical quantity measurement value, and on the dispersed spectrum information of the object serving as a reference of calibration, as the basis spectrum; or by applying partial least squares regression to the dispersed spectrum information of the target object and to the physical quantity measurement value. Advantageous Effects of Invention

With the calibration method for a temperature measurement device, the calibration device for a temperature measurement device, the calibration method for a physical quantity measurement device, and the calibration device for a physical quantity measurement device according to the present invention, it is possible to reduce the time and the effort required in adjustments when the device is swapped.

Brief Description of Drawings

FIG. 1 is a scatter plot illustrating relations between the heights and the weights of members of a group.
FIG. 2 is a schematic illustrating a relation between multi-point wavelength information and a first principal component.
FIG. 3A is a schematic illustrating black body radiation energy spectrum corresponding to seven increments of temperatures.
FIG. 3B is a schematic illustrating results of applying logarithmic operations to the black body radiation energy spectra illustrated in FIG. 3A.
FIG. 4 is a schematic illustrating a first principal component and a second principal component achieved by performing principal component analysis on the results of the logarithmic operations of the radiation energy illustrated in FIG. 3B.
FIG. 5A is a schematic illustrating exemplary reconstructions of the black body radiation energy spectra, reconstructed using the first principal component.

FIG. 5B is a schematic illustrating exemplary reconstructions of the black body radiation energy spectra, reconstructed using the first principal component and the second principal component.

FIG. 6 is a schematic illustrating a relation between a principal component vector of an emissivity variation and a principal component vector of the radiation energy.

FIG. 7 is a schematic illustrating one example of emissivity variations.

FIG. 8 is a schematic illustrating disperse energy spectra acquired from a target object.

FIG. 9 is a schematic illustrating a relation between scores of the first principal component and the temperatures of the target object, the score being resultant of performing the principal component analysis on ideal black body radiation energy spectra.

FIG. 10A is a schematic illustrating a result of measuring the surface temperatures of the target object based on the relation illustrated in FIG. 9.

FIG. 10B is a schematic illustrating a result of measuring the surface temperatures of the target object using a conventional technology.

FIG. 11 is a block diagram illustrating a structure of a temperature measurement device that is one embodiment of the present invention.

FIG. 12 is a schematic illustrating an internal structure of the FTIR illustrated in FIG. 11.

FIG. 13 is a schematic illustrating a structure of the contact thermometer illustrated in FIG. 11.

FIG. 14 is a flowchart illustrating the sequence of a regression equation creating process that is one embodiment of the present invention.

FIG. 15 is a flowchart illustrating the sequence of a temperature estimating process that is one embodiment of the present invention.

FIG. 16 is a schematic for explaining a structure of a temperature measurement device that is another embodiment of the present invention.

FIG. 17 is a schematic illustrating an internal structure of the spectrophotometer illustrated in FIG. 16.

FIG. 18 is a block diagram illustrating a structure of a calibration device for a temperature measurement device.

FIG. 19 is a schematic illustrating a result of measuring dispersed spectrum information of radiation energy from a black body furnace with a temperature measurement device before swapping, at each of a plurality of different temperatures within a range of 700 to 1100 degrees Celsius.

FIG. 20 is a schematic illustrating results of measuring the dispersed spectrum information of the radiation energy from the black body furnace with a temperature measurement device after swapping, at each of a plurality of different temperatures within a range of 700 to 1100 degrees Celsius.

FIG. 21 is a schematic illustrating one example of a relation between a calibration line for the temperature measurement device before swapping and a calibration line for the temperature measurement device after swapping.

FIG. 22 is a schematic illustrating one example of a relation between a basis spectrum for the temperature measurement device before swapping and a basis spectrum for the temperature measurement device after swapping.

Description of Embodiments

A calibration method for a temperature measurement device that is one embodiment of the present invention will now be explained with reference to some drawings.

To begin with, a concept of a measurement of a surface temperature using a temperature measurement device, to which the calibration method for a temperature measurement device according to one embodiment of the present invention is applied, will now be explained.

[Concept]

When the surface temperature of a target object is to be measured taking advantage of radiation energy from the target object, a measurement $L(\lambda, T)$ that is the result of multiplying a presupposed emissivity spectrum $\varepsilon(\lambda)$ to a radiation energy spectrum $L_B(\lambda, T)$ from a black body is measured, as indicated in Equation (1) below. The parameter $\lambda$ in Equation (1) denotes the wavelength for which the radiation energy is measured, and the parameter T denotes the surface temperature of the target object.

$$L(\lambda, T) = \varepsilon(\lambda) \cdot L_B(\lambda, T) \qquad (1)$$

Calculating log (natural logarithm) of each side of Equation (1), and modifying Equation (1), Equation (2) indicated below is obtained. Therefore, an estimation of $\log L_B(\lambda, T)$ that is the natural logarithm of a black body radiation energy spectrum can be calculated by substituting the measurement $L(\lambda, T)$ and the emissivity spectrum $\varepsilon(\lambda)$ into the

right hand side of Equation (2). The reason why the expression "estimation" is used is because it is unknown whether the presupposed emissivity spectrum $\varepsilon(\lambda)$ is correct. In other words, when the emissivity spectrum $\varepsilon(\lambda)$ deviates from the presupposed spectrum, the calculated natural logarithm $\log L_B(\lambda, T)$ of the black body radiation energy spectrum will not be a correct value.

$$\log L_B(\lambda, T) = \log L(\lambda, T) - \log \varepsilon(\lambda) \qquad (2)$$

Originally, the black body radiation energy spectrum $L_B(\lambda, T)$ is expressed using Planck's radiation law, as indicated in Equation (3) below. The parameters $c_1$, $c_2$ in Equation (3) are physical constants. Therefore, even if some error attributable to the emissivity spectrum $\varepsilon(\lambda)$ is included in the natural logarithm $\log L_B(\lambda, T)$ of the black body radiation energy spectrum, the natural logarithm $\log L_B(\lambda, T)$ of the black body radiation energy spectrum essentially can only take a fixed form. Therefore, there is a possibility that the true form of the natural logarithm $\log L_B(\lambda, T)$ of the black body radiation energy spectrum can be estimated, regardless of the emissivity spectrum $\varepsilon(\lambda)$. Therefore, as one approach for focusing on the form of the natural logarithm $\log L_B(\lambda, T)$ of the black body radiation energy spectrum, principal component analysis (basis factorization) is considered as a possible alternative.

$$L_B(\lambda, T) = \frac{2c_1}{\lambda^5} \frac{1}{\exp\left(\dfrac{c_2}{\lambda T} - 1\right)} \qquad (3)$$

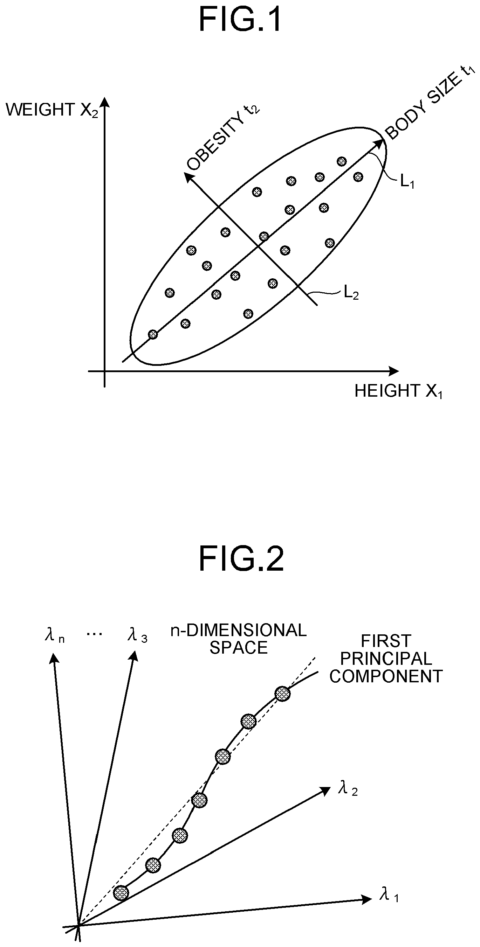

To begin with, a general approach of principal component analysis will be explained with reference to FIG. 1. FIG. 1 is a scatter plot illustrating relations between the heights $X_1$ and the weights $X_2$ of members of a group. Generally speaking, because the weight $X_2$ of a person whose height $X_1$ is greater is greater, the scatter plot illustrated in FIG. 1 exhibits a distribution rising diagonally toward the right. The segment $L_1$ inserted in FIG. 1 and rising diagonally toward the right is a line passing through the center of the distribution, and can be said to be representation of a scale "body size". The approach of principal component analysis is an approach for statistically arriving at a conclusion that the one-dimensional scale "body size $t_1$" is representative of the essential interpretation of combination data of the height $X_1$ and the weight $X_2$ (two-dimensional information). Mathematically speaking, this "body size" serves as a first principal component, and a second principal component that is information second most essential for the first principal component will be a component intersecting perpendicularly with the first principal component. In the example illustrated in FIG. 1, it can be said that, physically, a scale "obesity $t_2$" (segment $L_2$) is the second principal component.

In the example illustrated in FIG. 1, through the principal component analysis, information being originally two-dimensional (the height and the weight) is abstracted into one-dimensional information that is the "body size". Therefore, by applying this kind of information processing, via which the essence is extracted, to a spectral waveform of radiation energy in estimating the surface temperature, the essence can be extracted from multi-point wavelength information. In this case, the multi-point wavelength information is represented as one point in a space in a dimension the order of which is equal to the number of the wavelengths at which the measurements are collected, as illustrated in FIG. 2. For example, it can be said that, when pieces of dispersed spectrum data at n wavelengths corresponding to seven temperatures are given, it means that seven points are given in the n dimensional space. Therefore, considering the spread of the distribution of the seven points in the n dimensional space, the direction in which the spread is the greatest is taken as the direction of the first principal component, and this first principal component will serve as the most significant clue in distinguishing the seven points, that is, distinguishing the seven temperatures.

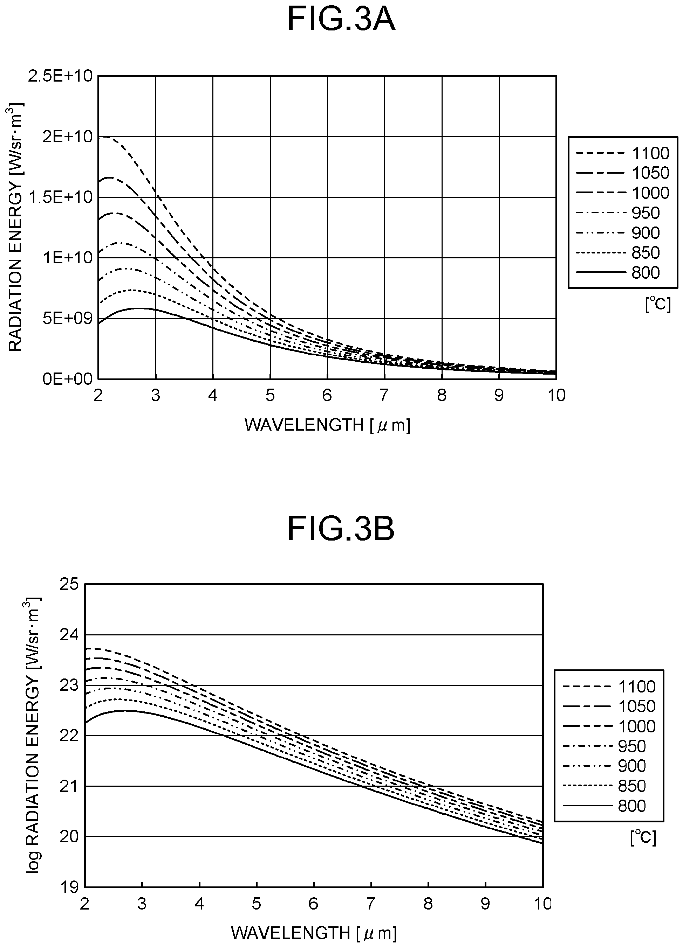

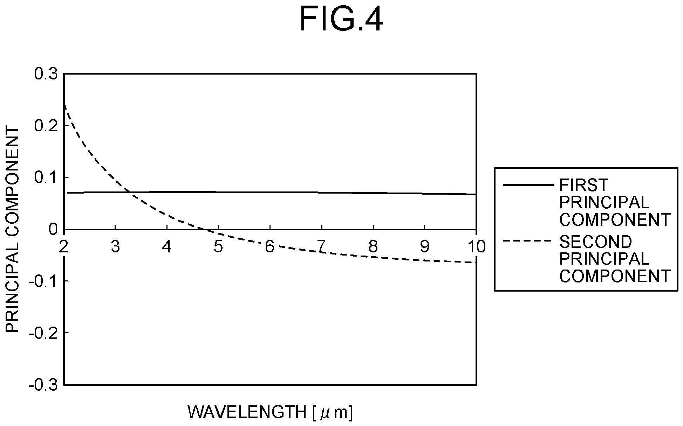

FIG. 4 illustrates the first principal component and the second principal component resultant of applying the principal component analysis to $\log L_B(\lambda, T)$ (FIG. 3B), which is the result of applying the logarithmic operation to the black body radiation energy spectra $L_B(\lambda, T)$ illustrated in FIG. 3A, the black body radiation energy spectra corresponding to the seven temperatures (these black body radiation energy spectra $L_B(\lambda, T)$ can be obtained by making measurements in the black body furnace). The first principal component illustrated in FIG. 4 is the spectral waveform most representative of the natural logarithms $\log L_B(\lambda, T)$ of the black body radiation energy spectra corresponding to the seven temperatures. The reason why the logarithmic operation is applied to the black body radiation energy spectra $L_B(\lambda, T)$ is to separate the emissivity $\varepsilon(\lambda)$, which affects actual measurements of the surface temperature of the target object by being multiplied to the black body radiation energy spectrum $L_B(\lambda, T)$, as an addition of $\log \varepsilon(\lambda)$.

The second principal component is an extraction of the direction where the spread of the seven points is the second largest in the vector space perpendicularly intersecting with the first principal component, and this is illustrated in FIG. 4. Intuitively, the first principal component appears to be a basis representing an average energy that increases as the temperature increases, and the second principal component appears to be a basis that represents detailed shapes. In the same manner, it is possible to obtain the principal components of the third and subsequent principality. This principal component information of lower principalities is essential spectral information (basis spectra) of the log $L_B(\lambda, T)$ of the original seven black body radiation energy spectra.

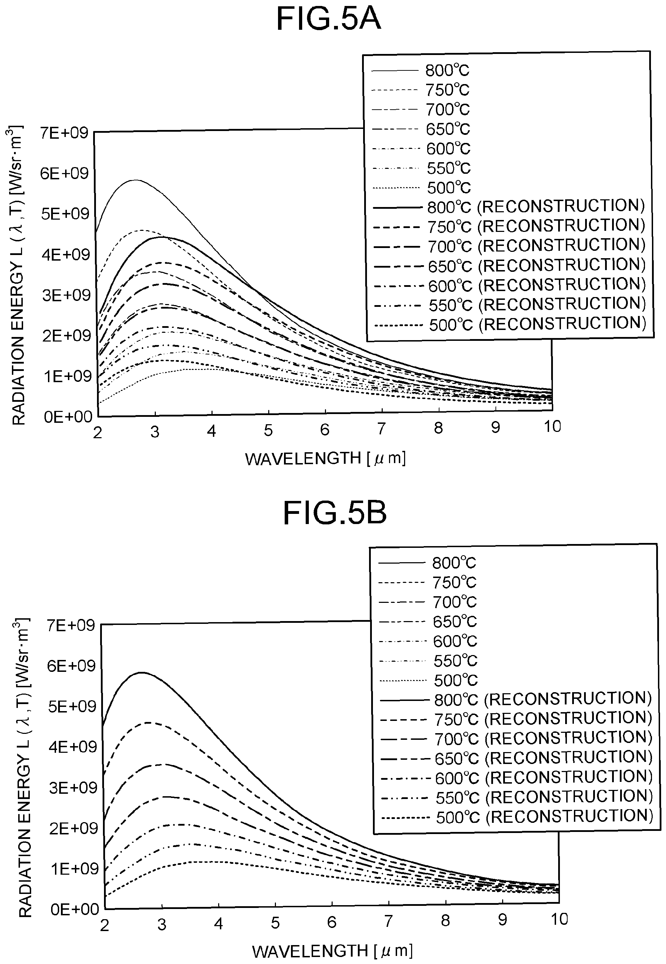

In order to validate that the principal component information of the lower principality certainly is the essential spectral information (basis spectra) of $L_B(\lambda, T)$ of the original seven black body radiation energy spectra, FIGS. 5A and 5B illustrate how much reconstructions of $L_B(\lambda, T)$ of the original seven black body radiation energy spectra, being reconstructed from the basis spectrum (spectra), match the original. The reconstructions herein mean reconstructions of the original spectra achieved by performing a multiply accumulate operation in which coefficients are multiplied to the basis vectors and the results are added, that is, resultant of performing a linear operation. The degree by which the reconstructions match varies depending on the degree how much the basis vector information of the lower principality is included the original seven black body radiation energy spectra $L_B(\lambda, T)$. FIG. 5A illustrates reconstructions achieved only with the first principal component, and FIG. 5B illustrates reconstructions achieved with the principal components of the first and the second principalities.

As may be clear from FIG. 5B, by using the principal components of the first and the second principalities, it can be seen that all of the seven black body radiation energy spectra $L_B(\lambda, T)$ are reconstructed very well. This means that it is not necessary to represent each one of the black body radiation energy spectra $L_B(\lambda, T)$ as N-point wavelength information, that is, represent as N-dimensional coordinates, and a radiation energy spectrum can be represented using only the two-point information corresponding to two coefficients that are a linear combination of two basis vectors. In other words, it can be said that the N-dimensional data is compressed into two-dimensional data. At this time, it is important that, although the number of dimensions is compressed greatly, the original energy spectra are reconstructed as "basis vectors", which are in the essential spectral form. Therefore, it can be assumed that these energy spectra are less likely to be affected by an emissivity variation that is a disturbance.

Supplemental explanations of the results of the logarithmic operations illustrated in FIG. 3B will now be provided using equations. The results of logarithmic operations illustrated in FIG. 3B are those resultants of applying a logarithmic operation to the radiation energies at N = 250 points measured at the increments of 0.32 $\mu$m in the wavelength direction (horizontal axis), within the wavelength range of wavelengths 2 $\mu$m to 10 $\mu$m, for example. x(i, j) denotes the log value of radiation energy. The parameter i (= 1 to 250) denotes a measured wavelength number, and the parameter j (= 1 to 7) denotes a temperature number. It is also assumed herein that the temperature corresponding to the parameter j is denoted as y(j). Furthermore, the principal component vectors resultant of applying the principal component analysis to the log values x(i, j) of the radiation energies are denoted as w(i, k). Although explanations on how the principal component vectors w(i, k) are determined are found in general literatures dealing with principal component analysis, to provide a brief explanation, the first principal component w(i, 1) is determined in such a manner that the spread of the parameter j in Equation (4) indicated below is maximized, and the second principal component w(i, 2) is determined in such a manner that the spread of the parameter j in Equation (5) indicated below is maximized, among the vectors perpendicularly intersecting with the first principal component w(i, 1).

$$\sum_{i=1}^{250} w(i,1)x(i, j) \tag{4}$$

$$\sum_{i=1}^{250} w(i,2)x(i, j) \tag{5}$$

The scale of each of these principal component vectors (the square root of the sum of the squares of the components i = 1 to N) is set to 1. In the principal component vector w(i, k), the possible value the parameter i can take falls within a range of 1 to 250, and, mathematically speaking, the possible value the parameter k can take is within a range of 1 to N. However, in this example, a range k = 1, 2 will be considered. Generally, although the essence of the log value x(i, j) of the radiation energy is better represented when the parameter k is smaller (the principality of the principal component is lower), in the present invention, the choice of the range of the parameter k is not limited to any particular range. Reconstructions of the original radiation energy data only using the first principal component w(i, 1) is expressed as Equation (6) indicated below.

$$\hat{x}(i, j) = \sum_{k=1}^{1} a(k, j)w(i, k) = a(1, j)w(i,1) \tag{6}$$

Mathematically, the parameter a(k, j) in Equation (6) is a constant (scalar) referred to as a principal component score. FIG. 5A illustrates an example of reconstructions of Equation (6) before the logarithmic operation is applied, that is, reconstructions displayed as values expressed by Equation (7) indicated below. "e" In Equation (7) represents a base of the natural logarithm.

$$e^{\hat{x}(i, j)} \tag{7}$$

In the same manner, values reconstructing the original radiation energy data with the additional use of the second principal component w(i, 2) as well as the first principal component w(i, 1) are expressed by Equation (8). In the same manner, FIG. 5B illustrates an example of reconstructions of Equation (8) before the logarithmic operation is applied. The reconstructions of the radiation energy data with the additional use the second principal component w(i, 2) nearly succeed in reproducing the original log values x(i, j) of the radiation energy. This means that, in the actual temperature estimation, even if the scores a(k, j) that is data corresponding to merely two points is used instead of the log values x(i, j) of the radiation energy including data of 250 points, the quality of the information does not deteriorate.

$$\hat{x}(i, j) = \sum_{k=1}^{2} a(k, j)w(i, k) = a(1, j)w(i,1) + a(2, j)w(i,2) \tag{8}$$

The score a(k, j) is obtained by calculating the inner product of a principal component vector w(i, k) and a log value x(i, j) of the original radiation energy, and each component is obtained by Equation (9) below.

$$a(k, j) = \sum_{i=1}^{250} x(i, j)w(i, k) \tag{9}$$

The basic idea of performing principal component analysis on the dispersed spectrum data has been explained so far. Let us now consider the method for applying the principal component analysis for preventing the emissivity of the target object from affecting the temperature measurement. The measurement $L(\lambda, T)$ with varying emissivity can be described as Equation (10) indicated below, by separating the emissivity into known emissivity $\varepsilon(\lambda)$ and an emissivity variation $\delta\varepsilon(\lambda)$ that can change depending on the operation conditions and the like, in the manner corresponding to Equation (1). At this time, the parameter $\varepsilon_0(\lambda)$ in Equation (10) denotes reference emissivity, such as a set value, and the parameter $\delta\varepsilon(\lambda)$ denotes the emissivity variation resultant of being subjected to various conditions.

$$L(\lambda, T) = \delta\varepsilon(\lambda) \cdot \varepsilon_0(\lambda) \cdot L_B(\lambda, T) \tag{10}$$

Calculating the log (natural logarithm) of each side of Equation (10) and modifying Equation (10), Equation (11) indicated below is obtained. In the conventional radiation temperature measurement, the surface temperature is obtained by, establishing the emissivity $\varepsilon_0(\lambda)$ at the measurement wavelengths as known, solving Equation with a presupposition expressed as Equation (12) for a monochromatic thermometer, and with a presupposition expressed as Equation (13) for a bichromatic thermometer. However, an error is often introduced to the temperature, because, strictly speaking, these presuppositions do not hold.

$$\log L_B(\lambda, T) = \log L(\lambda, T) - \log \varepsilon_0(\lambda) - \log \delta\varepsilon(\lambda) \qquad (11)$$

$$\delta\varepsilon = 0 \qquad (12)$$

$$\delta\varepsilon(\lambda 1) = \delta\varepsilon(\lambda 2) \qquad (13)$$

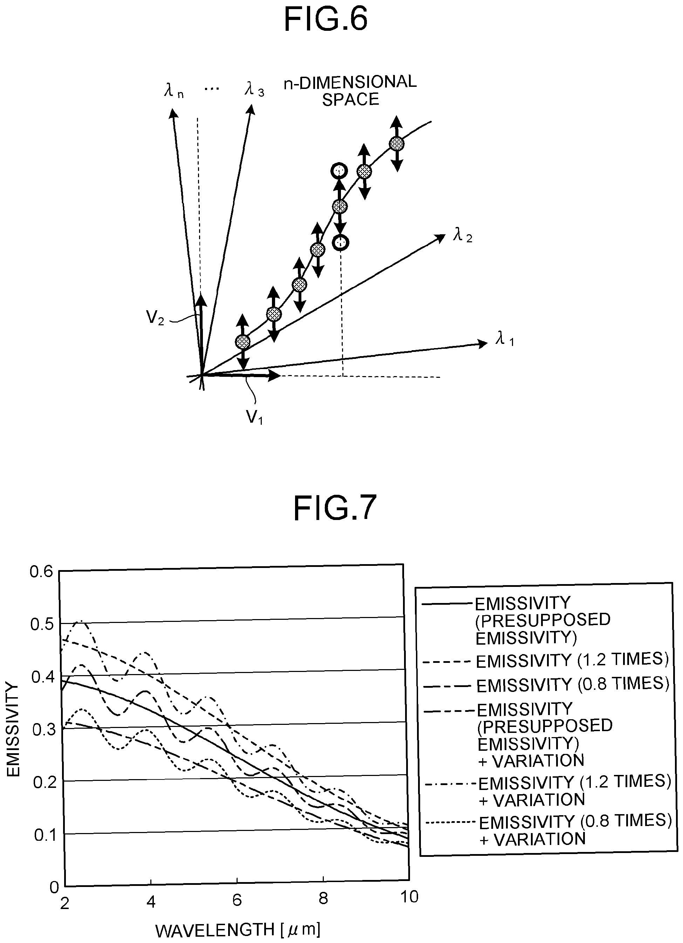

Assuming that the behavior of the emissivity of the target object is known in advance, the first principal component v(i, 1) of the emissivity variation is calculated by performing the principal component analysis on the emissivity variation data. The first principal component v(i, 1) of the emissivity variation represents a statistical behavior of the behavior of the emissivity of the target object. In other words, it can be said that all of the vectors perpendicularly intersecting with the principal component vector of the emissivity variation are vectors not affected by the emissivity variation. FIG. 6 illustrates a conceptual schematic of the above explanation. In other words, as illustrated in FIG. 6, a principal component vector $V_1$ corresponding to radiation energy perpendicularly intersecting with a principal component vector $V_2$ of the emissivity variation is not affected by the emissivity variation, and, therefore, exhibits the maximum sensitivity to the temperature of the target object.

Therefore, by performing the principal component analysis on the radiation energy by imposing a constraint to the radiation energy as being perpendicularly intersecting with the first principal component v(i, 1) of the emissivity variation, essential information of the radiation energy can be extracted without being affected by the emissivity variation. As a specific procedure, the first principal component v(i, 1) of the emissivity variation is excluded from the radiation energy x(i, j) in advance, and the principal component analysis is then applied to the resultant values, as indicated in Equation (14) below. In this manner, every principal component thus obtained intersects perpendicularly with the first principal component v(i, 1) of the emissivity variation. Furthermore, in many cases, because the first principal component v(i, 1) of the emissivity variation is merely a statistical calculation, it is possible that the actual emissivity variation does not completely match the first principal component v(i, 1) of the emissivity variation, and deviates therefrom. However, because, in such a situation, too, it can be considered that the principal component calculated with Equation (14) almost perpendicularly intersects with the first principal component v(i, 1) of the emissivity variation, it is possible to conclude that a condition where it is least likely for an error to be introduced to the measurement is achieved.

$$\widetilde{x}(i, j) = x(i, j) - v(i,1) \cdot \sum_{i=1}^{N} v(i,1) \cdot x(i, j) \qquad (14)$$

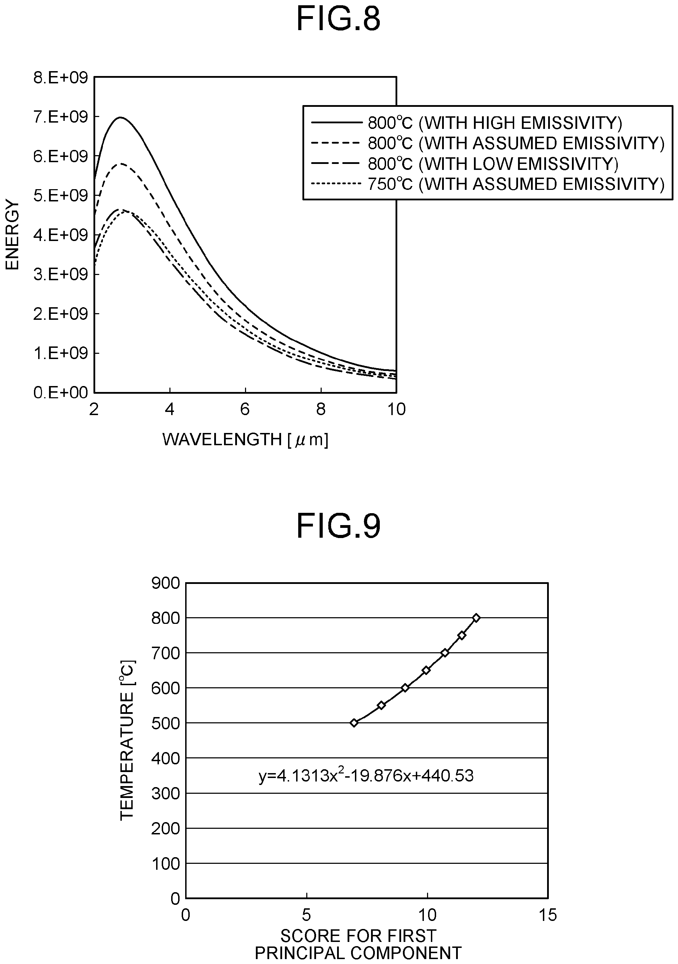

An example of a simulation of the temperature measurements carried out based on the concept described above for a target object in which the emissivity varies by magnitudes illustrated in FIG. 7 will now be explained. This is an example in which Equation (15) indicated below holds if the variation of the emissivity is a multiple of a constant, that is, when the parameter K is a constant. Therefore, the principal component of the emissivity variation resultant of the logarithmic operation becomes what is called a direct-current component, that is, has all of its wavelength components at the same value. When the emissivity varies in this manner, a radiation energy measurement is measured as a value resultant of multiplying emissivity to the black body radiation energy, as illustrated in FIG. 5A. FIG. 8 illustrates the measurements of the disperse energy spectra, measured correspondingly to respective emissivity values for 800 degrees Celsius. As it may be clear from Figure, when the emissivity is low at 800 degrees Celsius, the resultant waveform becomes similar to that achieved with the emissivity presupposed for 750 degrees Celsius, and, therefore, it is difficult, merely with the use of a monochromatic thermometer among the conventional approaches, to make an accurate measurement of the target object with such varying emissivity.

$$\delta\varepsilon(\lambda) = K \qquad (15)$$

To address this issue, the logarithmic operation is applied to these waveforms, and log $\varepsilon(\lambda)$ that is the presupposed emissivity data is subtracted from the resultant waveforms. The resultant waveforms are then represented using a basis representing the emissivity variation (a direct-current component in this example), and an essential basis (first principal component) perpendicularly intersecting with the basis representing the emissivity variation, and representing a radiation energy spectrum of the black body. Let us now draw an attention to coefficients multiplied to the first principal component. The reason for paying an attention to the coefficients is that the coefficient corresponding to the first principal component of the black body radiation energy spectrum is not affected by the emissivity variation, and the coefficient can be considered to have information that is essential in representing the waveform of the black body radiation energy spectrum.

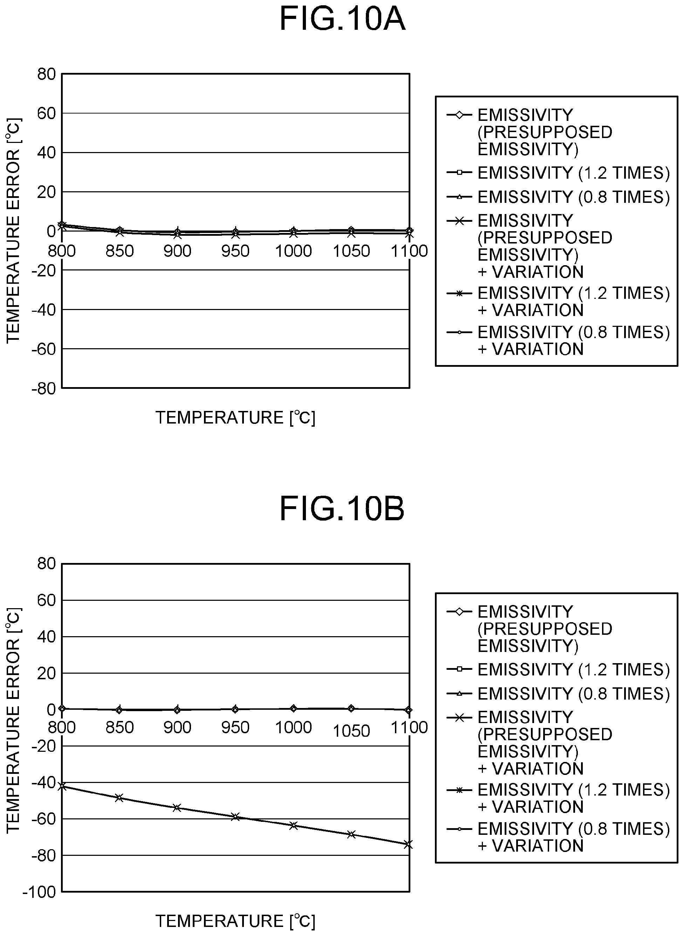

Focusing on the coefficient of the first principal component with the principal component of the emissivity variation removed, it can be seen that a relation between the coefficients (scores) of the first principal component, the coefficients being resultant of applying the principal component analysis to the ideal black body radiation energy spectra, has a relation with the temperatures of the target object, as illustrated in FIG. 9. Therefore, a calibration line representing a relation between the coefficients of the second principal component and the temperatures of the target object was calculated in advance based on the relation illustrated in FIG. 9, and temperatures were estimated using the coefficients of the first principal component calculated from the radiation energy spectra measured as the emissivity went through increases and decreases. As a result, it was confirmed that, even when the emissivity went through increases and decreases as illustrated in FIG. 7, errors still fell within the range illustrated in FIG. 10A. When the measurements were carried out using a bichromatic thermometer (at the wavelength 2 $\mu$m and the wavelength of 4 $\mu$m, in this example), the errors introduced to the measurements remained small when a condition that the ratios of the emissivity are completely equal is met, but the errors increased when the ratios of emissivity were not necessarily equal and varied, as illustrated in FIG. 10B.

Therefore, it was confirmed that, as source information for estimating temperatures, the estimation being a purpose of the present invention, it is effective to use information resultant of multiplying the basis vector coefficient (principal component score) acquired by performing principal component analysis, to the dispersed information including a large number of wavelengths, and by reconstructing the original disperse information using the low-principality principal components. To explain in other words comparing with the earlier example, instead of estimating a temperature based on the original N-point wavelength data, the temperature is estimated by compressing the dimensions of the N-point wavelength data to two-point data that is the scores of the principal components of the first to the second principalities, and by estimating temperature data from the two-point information using an ordinary multiple regression method. This is because, considering that the N-point wavelength data can be reproduced sufficiently based on the two-point information, as explained with reference to FIGS. 5A and 5B, the two-point information contains sufficient information for estimating a temperature.

To supplement in the form of the equation, a temperature is estimated using Equation (17) indicated below for estimating the temperature from the two-point data, which is the scores of the principal components of the first to the second principalities, instead of Equation (16) indicated below for estimating the temperature from the N-point wavelength data.

$$\hat{y}(j) = \sum_{i=1}^{250} b(i)x(i,j), \ \hat{y}(j) \ \text{is an estimated temperature,} \tag{16}$$

$$\text{and } b(i) \text{ is a multiple} - \text{regression coefficient} \ (N \text{ coefficients})$$

$$\hat{y}(j) = \sum_{k=1}^{2} c(k)a(k,j), \tag{17}$$

$$c(k) \text{ is a multiple} - \text{regression coefficient} \ (2 \text{ coefficients})$$

A temperature measurement device and a temperature measurement method executed by the temperature measurement device, having been come up with based on the concept described above, that is one embodiment of the present invention will now be explained in detail.

[Structure of Temperature Measurement Device]

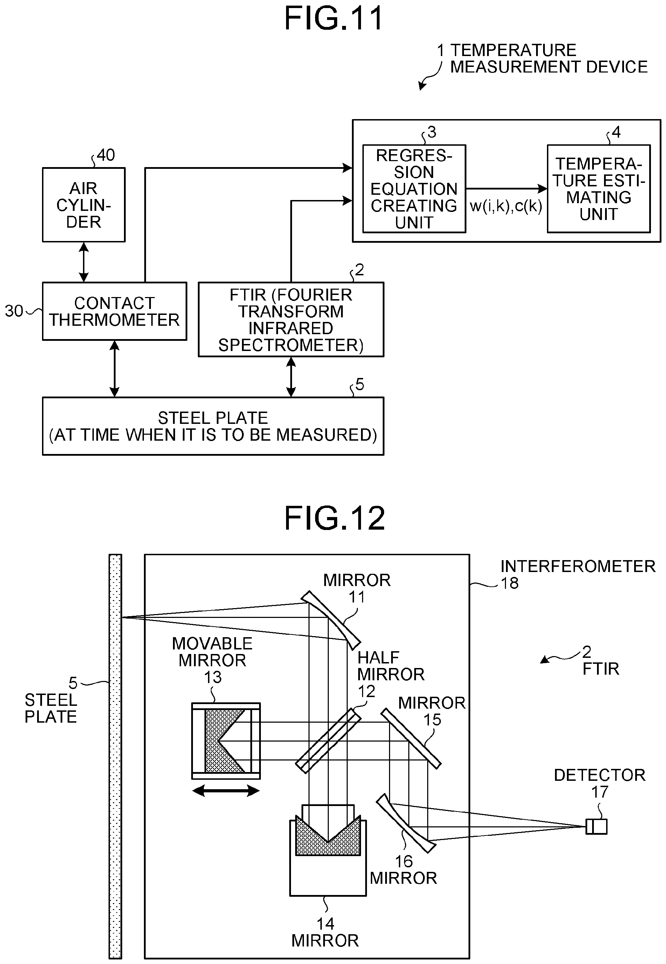

A structure of a temperature measurement device that is an embodiment of the present invention will now be explained with reference to FIGS. 11 to 13.

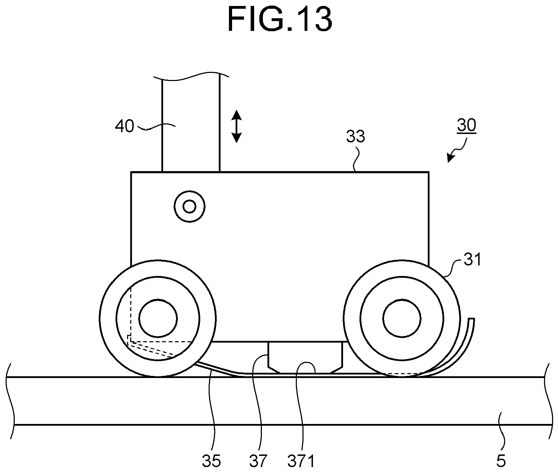

FIG. 11 is a block diagram illustrating a structure of the temperature measurement device that is one embodiment of the present invention. FIG. 12 is a schematic illustrating an internal structure of the FTIR illustrated in FIG. 11. FIG. 13 is a schematic illustrating a structure of the contact thermometer illustrated in FIG. 11. As illustrated in FIG. 11, this temperature measurement device 1 that is one embodiment of the present invention includes a Fourier transform infrared spectrometer (FTIR) 2, a contact thermometer 30, an air cylinder 40, a regression equation creating unit 3, and a temperature estimating unit 4.

The FTIR 2 is configured to measure the dispersed spectrum of the radiation energy emitted from a steel plate 5 that is the target object. As illustrated in FIG. 12, the FTIR 2 includes a mirror 11, a half mirror 12, a movable mirror 13, a mirror 14, mirrors 15, 16, and a detector 17, and the mirror 11, the half mirror 12, the movable mirror 13, and the mirrors 14 to 16 makes up an interferometer 18. The radiation light emitted from the steel plate 5 is guided to the interferometer 18, and the detector 17 detects the light amount of the light output from the interferometer 18.

At this time, dispersed spectrum information of the radiation energy from the steel plate 5 is acquired by performing Fourier transform to the signals from the detector 17, the signals being measured chronologically while the movable mirror 13 included in the interferometer 18 is being moved. Although time for moving the movable mirror 13 is required to acquire one piece of dispersed spectrum information, but it is not a problem if the temperature variation within this time period is sufficiently small. As the method for measuring the dispersed spectrum, there are various other possible alternatives, such as a method using a diffraction grating and a method using wavelength selection filters, and any of these methods may be used.

The contact thermometer 30 is configured to measure the temperature of the steel plate 5 by bringing a thermocouple into contact with the steel plate 5, which is the target object, and making a measurement. In situations where temperatures are measured in the actual manufacturing process, the temperatures are measured for a steel plate being conveyed at a predetermined speed inside a furnace such as an annealing furnace. Therefore, in this embodiment, a contact thermometer that is generally used for measuring the temperatures of a moving body is used as the contact thermometer 30.

In other words, for example, as illustrated in FIG. 13, the contact thermometer 30 includes a body 33 placed on the steel plate 5 being conveyed at a predetermined speed, via touch rolls 31 that enable the body 33 to be carried stably in a manner following the steel plate 5, and that also include a sled-like metal foil 35 attached to the body 33 and configured to slide along the steel plate 5. A heat-sensing unit 371 of a thermocouple 37 is disposed on the rear side of the metal foil 35, and this heat-sensing unit 371 measures the temperature. At this time, the body 33 is disposed in such a manner that the thermocouple 37 is supported thereby, and that the heat-sensing unit 371 is kept at a predetermined position on the rear side of the metal foil 35 and allowed to measure the temperature via the metal foil 35. This contact thermometer 30 is configured movable in the up-and-down directions indicated by the arrow in FIG. 13, by driving the air cylinder 40 attached to the body 33, and is also configured to bring the metal foil 35 into contact with, and to allow the metal foil 35 to slide along the steel plate 5, when the temperature is measured, and to be removed from the steel plate 5 and to escape upwards when temperature is not measured. A temperature indicated by the contact thermometer 30 (temperature measurement) is output to the regression equation creating unit 3 at appropriate timing.

The regression equation creating unit 3 and the temperature estimating unit 4 are configured as an information processing unit such as a micro-computer. The regression equation creating unit 3 calculates fundamental data (basis spectra and multiple-regression coefficients) used when the temperature estimating unit 4 estimates the surface temperature of the steel plate 5, by executing a regression equation creating process, which will be described later. The temperature estimating unit 4 measures the surface temperature of the steel plate 5 by executing a temperature estimating process, which will be described later, using the fundamental data calculated by the regression equation creating unit 3.

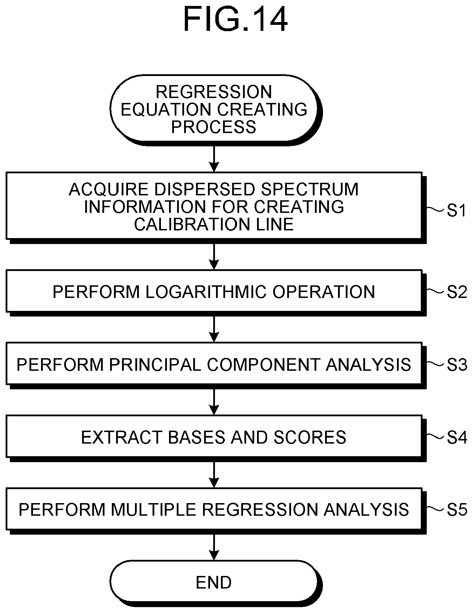

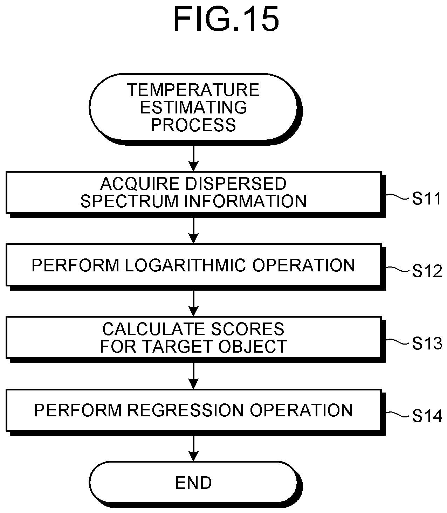

The temperature measurement device 1 having such a structure estimates the surface temperature of the steel plate 5 by executing the regression equation creating process and the temperature estimating process described below. Operations of the temperature measurement device 1 executing the regression equation creating process and the temperature estimating process will now be explained with reference to the flowchart illustrated in FIGS. 14 and 15.

[Regression Equation Creating Process]

To begin with, an operation of the temperature measurement device 1 executing the regression equation creating process will be explained with reference to the flowchart illustrated in FIG. 14.

FIG. 14 is a flowchart illustrating the sequence of the regression equation creating process that is one embodiment of the present invention. The flowchart illustrated in FIG. 14 is started at a predetermined timing in an adjustment process performed before the surface temperature of the steel plate 5 is measured, and the regression equation creating process goes to the process at Step S1. Before performing the regression equation creating process, the steel plate 5 illustrated in FIG. 11 is replaced with a black body furnace.

In the process at Step S1, based on an indicated temperature input as appropriate from the contact thermometer 30 in the manner described above, the regression equation creating unit 3 retrieves a database for the dispersed spectrum information of the radiation energy corresponding to the black body furnace associated with the temperature, and acquires the dispersed spectrum information as dispersed spectrum information for creating a calibration line. As a result, the process at Step S1 is finished, and the regression equation creating process goes to the process at Step S2.

It can be expected that, in some situations, the indicated temperature input from the contact thermometer 30 varies depending on how the metal foil 35 is brought into contact with the steel plate 5 at the time when the temperature is measured. Therefore, without limitation to the example in which the indicated temperature input from the contact thermometer 30 is used as it is, it is also possible to use a secondary calculation such as the maximum or the average temperature of a plurality of indicated temperatures that are measured within a predetermined time period.

Furthermore, there are also cases in which it is difficult to measure the dispersed spectrum information of the black body furnace for each temperature covering the entire temperature range, e.g., when a wide range of temperatures are possible, as the temperature of the target object. In such a case, it is also possible to calculate the scores by performing the principal component analysis on the dispersed spectrum information of the black body furnace, measured for temperatures at some points within the temperature range, and to calculate a relation equation between the scores and the black body furnace temperatures, in advance. In the process at Step S1, a score corresponding to the indicated temperature may then be calculated based on the calculated relation equation, and the dispersed spectrum information corresponding to the indicated temperature may be reconstructed using the calculated scores, in accordance with the same approach as that illustrated in FIG. 5B, and be acquired as the dispersed spectrum information for creating a calibration line.

In the process at Step S2, emissivity data is then accumulated by causing the regression equation creating unit 3 to perform a rationing operation of the dispersed spectrum information for creating a calibration line, acquired as appropriate as a result of the process at Step S1, and the dispersed spectrum information of the radiation energy from the steel plate 5, acquired via the FTIR 2, being acquired when the indicated temperature used in the corresponding dispersed spectrum information is measured. The logarithmic operation of the emissivity variation data acquired from the accumulated emissivity data is then performed. As a result, the process at Step S2 is finished, and the regression equation creating process goes to the process at Step S3.

In the process at Step S3, the regression equation creating unit 3 performs the principal component analysis on the emissivity variation data calculated in the process at Step S2. When it can be presumed that the principal component of the emissivity variation is what is called a direct-current component, in which the values of almost all of its components are equal, in advance, it is possible to determine that the principal component is a direct-current component, without using the emissivity variation data. The regression equation creating unit 3 also performs the principal component analysis on the radiation energy spectrum of the black body furnace, the radiation energy spectrum being calculated in the process at Step S2, in the same manner, under the condition of being perpendicularly intersecting with the principal component of the emissivity variation data. As a result, the process at Step S3 is finished, and the regression equation creating process goes to the process at Step S4.

In the process at Step S4, the regression equation creating unit 3 extracts principal components to be used, from the result of principal component analysis, acquired in the process at Step S3, as bases. The regression equation creating unit 3 also calculates the score a(k, j) corresponding to the coefficient according to the present invention, for each of the basis spectra, using Equation (9) having been already described above. As a result, the process at Step S4 is finished, and the regression equation creating process goes to the process at Step S5.

In the process at Step S5, the regression equation creating unit 3 calculates the multiple-regression coefficients c(k) in the multiple-regression equation in Equation (17) having been described above, by applying the scores a(k, j) calculated in the process at Step S4, and the black body furnace temperatures corresponding to the dispersed spectrum information for creating a calibration line to Equation (17) having been described above. The regression equation creating unit 3 then outputs the data of the basis spectra (principal components w(i, k), k = 1, 2) and the multiple-regression coefficients (c(k), k = 1, 2) to the temperature estimating unit 4, as the fundamental data. As a result, the process at Step S5 is finished, and the sequence of the regression equation creating process is ended.

In the example explained above, a basis not affected by the emissivity variation is extracted by obtaining the principal component of the emissivity variation, and obtaining the principal component of the radiation energy, the latter principal component being that perpendicularly intersecting with the principal component of the emissivity variation, but the present invention is not limited thereto. For example, it is also possible to obtain a basis exhibiting the strongest correlation with the temperature indicated by the contact thermometer 30, using partial least squares (PLS) regression, for example, based on the dispersed spectrum information acquired from a steel plate affected by the emissivity variation, and to also use various mathematical statistical analysis techniques for the basis extraction.

[Temperature Estimating Process]

An operation of the temperature measurement device 1 executing the temperature estimation creating process will now be explained, with reference to the flowchart illustrated in FIG. 15.

FIG. 15 is a flowchart illustrating the sequence of the temperature estimating process that is one embodiment of the present invention. The flowchart illustrated in FIG. 15 is started at predetermined timing after the regression equation creating process is ended, and the temperature estimating process goes to the process at Step S11.

In the process at Step S11, the temperature estimating unit 4 acquires the dispersed spectrum information of the radiation energy from the steel plate 5, via the FTIR 2. As a result, the process at Step S11 is finished, and the temperature estimating process goes to the process at Step S12.

In the process at Step S12, the temperature estimating unit 4 performs the logarithmic operation process to the dispersed spectrum information acquired in the process at Step S11, and subtracts the logarithm of the emissivity spectrum $\varepsilon(\lambda)$ assumed from the result of the logarithmic operation, in accordance with Equation (2) described above. As a result, the process at Step S12 is finished, and the temperature estimating process goes to the process at Step S13.

In the process at Step S13, the temperature estimating unit 4 calculates the scores of the basis spectra a(k, j) of the target object, by substituting the result x(i, j) of the subtracting process at Step S12 and the basis spectra (principal components w(i, k), k = 1, 2) input from the regression equation creating unit 3 into Equation (9) described above. As a result, the process at Step S13 is finished, and the temperature estimating process goes to the process at Step S14.

In the process at Step S14, the temperature estimating unit 4 performs a regression operation by applying the scores a(k, j) calculated in the process at Step S13 and the multiple-regression coefficients (c(k), k = 1, 2) input from the regression equation creating unit 3 to Equation (17) described above, to estimate the surface temperature of the steel plate 5. As a result, the process at Step S14 is finished, and the sequence of the temperature estimating process is ended.

As may be clear from the explanation above, in the temperature measurement device 1 that is one embodiment of the present invention, the regression equation creating unit 3 factorizes the dispersed spectrum information for creating a calibration line into basis spectra, calculates the scores a(k, j) for the bases, and calculates multiple-regression coefficients (c(k), k = 1, 2) from the scores a(k, j) and the temperature data corresponding to the dispersed spectrum information for creating a calibration line. Based on the dispersed spectrum information of the target object, and the bases calculated by the regression equation creating unit 3, the temperature estimating unit 4 calculates the scores a(k, j) related to the bases, and estimates the temperature of the target object based on the calculated scores a(k, j) and the multiple-regression coefficients (c(k), k = 1, 2). In this manner, the temperatures of the target object can be measured highly accurately, without being affected by the variation of the emissivity.

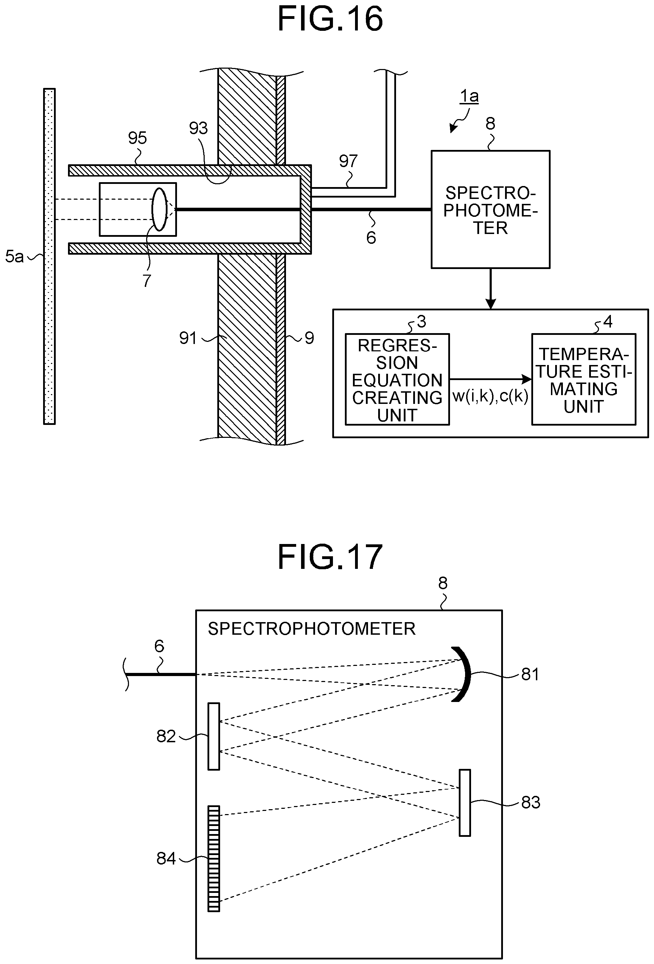

The structure of the temperature measurement device for implementing the present invention is not limited to the structure illustrated in FIG. 11. FIG. 16 is a schematic illustrating a structure of a temperature measurement device 1a that is another embodiment of the present invention, and an annealing furnace to which this temperature measurement device 1a is applied, and having a part thereof cut out so that inside thereof is shown. FIG. 17 is a schematic illustrating an internal structure of a spectrophotometer 8 illustrated in FIG. 16. In FIG. 16, the elements that are the same as those according to the embodiment described above are given the same reference signs.

This temperature measurement device 1a is configured to measure the temperature of a steel plate 5a being heated inside a furnace such as an annealing furnace during a manufacturing process, and includes an optical fiber 6 inserted into a pass-through hole 93 passing through a furnace body 9 of the annealing furnace and a heat insulator 91 provided on the inner surface of the furnace body 9, a collimator lens 7 installed at one end of the optical fiber 6 positioned on the inner side of the furnace, the spectrophotometer 8 connected to the other end of the optical fiber 6 on the outer side of the furnace, the regression equation creating unit 3, and the temperature estimating unit 4. The light beams (light to be measured) emitted almost in parallel from the steel plate 5a, which is the target object, pass through the collimator lens 7 and the optical fiber 6, and become incident on the spectrophotometer 8.

The one end portion of the optical fiber 6 inserted in the pass-through hole 93 and the collimator lens 7 provided on the one end are separated from the surroundings by a water-cooled light shield tube 95 so that the light emitted from the heat insulator 91 does not get mixed with the light to be measured. The internal space of the water-cooled light shield tube 95 is purged with nitrogen filled thereinto via a pipe 97 so that parts such as lenses are prevented from being contaminated.

The spectrophotometer 8 is implemented as a Czerny-Turner spectrophotometer, for example, and includes a collimator mirror 81, a diffraction grating 82, a focus mirror 83, and a detector 84. In this spectrophotometer 8, the light to be measured being incident from the other end of the optical fiber 6 is collimated into parallel light by the collimator mirror 81, become incident on the diffraction grating 82, and become dispersed. The entire wavelengths of the dispersed light to be measured are received by the detector 84 via the focus mirror 83. In this example, establishing the steel plate 5a inside the furnace as a target object, relatively high temperatures around 800 degrees Celsius to 1100 degrees Celsius are to be measured. Therefore, a one-dimensional array Si CCD or a photodiode array is used as the detecting element of the detector 84, for example, to detect a relatively short wavelength range, specifically, a wavelength range of 0.4 $\mu$m to 0.8 $\mu$m or 0.4 $\mu$m to 1.0 $\mu$m.

[Calibration Method]

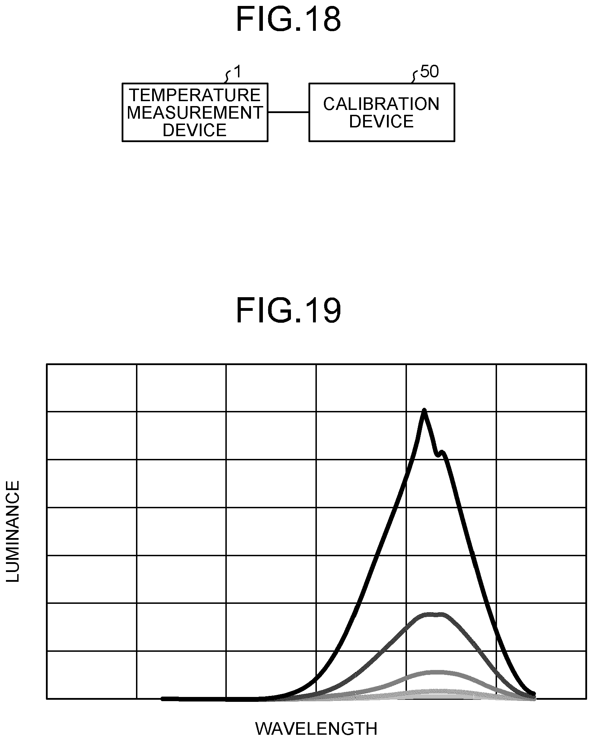

It is assumed herein now that a plurality of temperature measurements measured using the contact thermometer 30, and dispersed spectrum information corresponding thereto are stored for an existing temperature measurement device (hereinafter, referred to as a device A), and a multiple-regression equation has been created based on the stored information. Because, in order to obtain the temperature measurements and the dispersed spectrum information corresponding to the temperature measurements, an appropriate material and appropriate timing need to be selected in the production line, and to perform inspections for scratches or the like formed as the contact thermometer 30 is brought into contact with the material, an extremely enormous amount of effort and time is required. In fact, the time equivalent to a few months or so is required to acquire information for thirty cases or so. When the device A is to be replaced for some reason such as a failure or a calibration, because the same kind of process needs to be taken for a new temperature measurement device (hereinafter, referred to as a device B), an enormous amount of effort and time is required in adjustments before the device is replaced. To address this issue, in this embodiment, the time and the effort required in adjustments when the device is swapped is reduced by connecting a calibration device 50 to the device A, B (the temperature measurement device 1), as illustrated in FIG. 18, and performing a calibration described below.

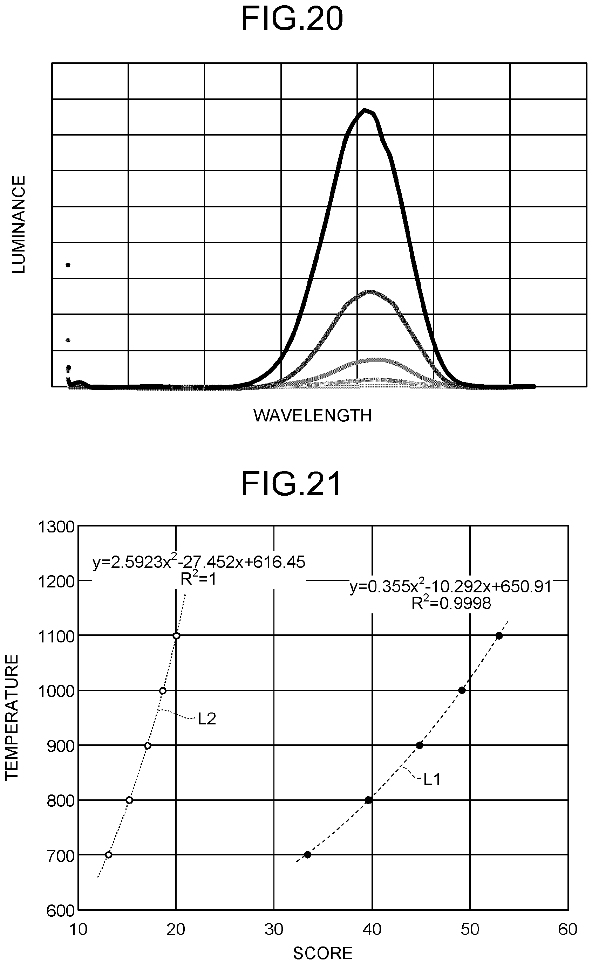

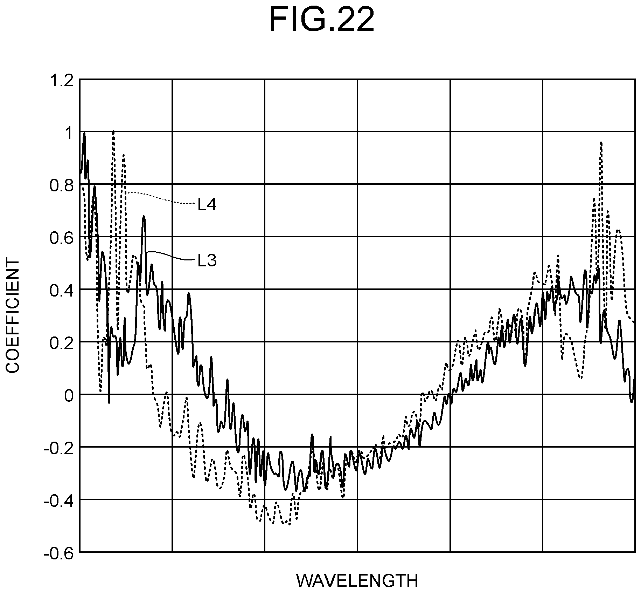

Specifically, to begin with, the calibration device 50 measures dispersed spectrum information of the radiation energy from the black body furnace, and dark current data in the device A and the device B, at each of a plurality of different temperatures. FIG. 19 is a schematic illustrating results of measuring the dispersed spectrum information of the radiation energy from the black body furnace in the device A, at a plurality of different temperatures within a range of 700 to 1100 degrees Celsius. FIG. 20 is a schematic illustrating results of measuring the dispersed spectrum information of the radiation energy from the black body furnace in the device B, at a plurality of different temperatures within a range of 700 to 1100 degrees Celsius. By performing the following process to the temperature measurements measured with the contact thermometer 30 in the device A, and to the dispersed spectrum information corresponding to these temperature measurements, using the measured dispersed spectrum information of the radiation energy from the black body furnace and the dark current data, the calibration device 50 creates temperature measurements measured using a contact thermometer included in the device B, and dispersed spectrum information corresponding to the temperature measurements. Finally, the calibration device 50 calculates the calibration line and the basis spectra for the device B by executing the regression equation creating process described above, using the temperature measurements measured with the contact thermometer in the device B, and the dispersed spectrum information corresponding to the temperature measurements. FIG. 21 is a schematic illustrating one example of a relation between the calibration line $L_1$ for the device A and the calibration line $L_2$ for the device B. FIG. 22 is a schematic illustrating one example of a relation between a basis spectrum $L_3$ for the device A and the basis spectrum $L_3$ for the device B.

To create temperature measurements using a contact thermometer in the device B and the dispersed spectrum information corresponding to the temperature measurements, to begin with, the calibration device 50 calculates the spectrum of the radiation energy emitted from the black body furnace in the device B, the spectrum being that of the temperature measurements measured using the contact thermometer 30. The calibration device 50 then subtracts the dark current of the device B from the spectrum of the radiation energy emitted from the black body furnace, the spectrum being that of the temperature measurements measured using the contact thermometer 30 in the device B, subtracts the dark current of the device A from the spectrum of the radiation energy from the black body furnace of the device A, the spectrum being that of the temperature measurements measured using the contact thermometer 30, and calculates a value resultant of dividing the result of the former subtraction by the result of the latter subtraction as a sensitivity correction coefficient. The calibration device 50 then subtracts the dark current data from the dispersed spectrum measured with the temperature measurements using the contact thermometer 30 in the device A, and multiples the sensitivity correction coefficient to the resultant dispersed spectrum. Finally, the calibration device 50 then adds the dark current data of the device B to the resultant dispersed spectrum. In this manner, it is possible to create temperature measurements using the contact thermometer, and the dispersed spectrum information corresponding to the temperature measurements for the device B.

Some embodiment to which the invention made by the present inventors is applied has been explained above, but the descriptions and the drawings making up a part of the disclosure of the present invention as the embodiment is not intended to limit the present invention in any way. For example, although this embodiment is an application of the present invention to a calibration of a temperature measurement device, the applicable scope of the present invention is not limited to this embodiment, and the present invention can be applied to a calibration of a device for measuring a physical quantity other than temperatures, such as a device for measuring the film thickness of a thin film such as an oxide film or a chemical conversion coating film formed on a surface of a metal material. By applying the present invention to a calibration of a device for measuring a physical quantity other than temperature, it is possible to reduce the time and the efforts required in adjustments when the device is swapped. In the manner described above, any other embodiments, examples, operation technologies, and the like achieved by those skilled in the art, for example, based on this embodiment all fall within the scope of the present invention.

Industrial Applicability

According to the present invention, it is possible to provide a calibration method for a temperature measurement device, a calibration device for a temperature measurement device, a calibration method for a physical quantity measurement device, and a calibration device for a physical quantity measurement device, the calibration methods and device being capable of reducing the time and the efforts required in adjustments when the device is swapped.

Reference Signs List

| 1, 1a | temperature measurement device |
| 2 | Fourier transform infrared spectroscopy (FTIR) |
| 3 | regression equation creating unit |
| 4 | temperature estimating unit |
| 5, 5a | steel plate |
| 6 | optical fiber |
| 7 | collimator lens |
| 8 | spectrophotometer |
| 11, 14, 15, 16 | mirror |
| 12 | half mirror |
| 13 | movable mirror |
| 17 | detector |
| 18 | interferometer |
| 30 | contact thermometer |
| 35 | metal foil |
| 37 | thermocouple |
| 40 | air cylinder |
| 50 | calibration device |
| 81 | collimator mirror |
| 82 | diffraction grating |
| 83 | focus mirror |
| 84 | detector |

**Claims**

1. A calibration method for a temperature measurement device, the temperature measurement device being configured to measure a surface temperature of a target object by measuring radiation energy emitted from the target object using spectroscopy and applying signal processing to dispersed spectrum information thus acquired, where the surface temperature is measured by calculating a score of a basis spectrum acquired in advance based on the dispersed spectrum information acquired from the target object, and using the score with a calibration line acquired in advance, and the basis spectrum and the calibration line are determined based on a temperature measurement value that is a resultant of measuring the target object with a contact thermometer, the calibration method comprising steps of:

   measuring dispersed spectrum information of radiation energy from a black body furnace and dark current data with a temperature measurement device before swapping and with a temperature measurement device after swapping, at each of a plurality of different temperatures;
   generating, using information thus measured, a temperature measurement value to be measured by a contact thermometer included in the temperature measurement device after swapping, and dispersed spectrum information corresponding to the temperature measurement value, from a temperature measurement value measured by a contact thermometer included in the temperature measurement device before swapping and dispersed spectrum information corresponding to the temperature measurement value; and
   determining, using the information thus generated, the basis spectrum and the calibration line for the temperature measurement device after swapping.

2. The calibration method for a temperature measurement device according to claim 1, wherein the basis spectrum is determined:

   by calculating emissivity from a ratio of the dispersed spectrum information of the target object with respect to dispersed spectrum information of radiation energy acquired by making a measurement of the black body furnace at a same temperature as the temperature measurement value measured by the contact thermometer, and determining a spectrum perpendicularly intersecting with a principal component resultant of performing principal component analysis on an emissivity variation that is based on the emissivity, as the basis spectrum; or by applying partial least squares regression to the dispersed spectrum information of the target object and to the temperature measurement value measured by the contact thermometer.

3. A calibration device for a temperature measurement device, the temperature measurement device being configured to measure a surface temperature of a target object by measuring radiation energy emitted from the target object using spectroscopy and by applying signal processing to dispersed spectrum information thus acquired, where the surface temperature is measured by calculating a score of a basis spectrum acquired in advance based on the dispersed spectrum information acquired from the target object and using the score with a calibration line acquired in advance, and the basis spectrum and the calibration line are determined based on a temperature measurement value that is a resultant of measuring the target object with a contact thermometer, the calibration device comprising a unit configured to:

generate a temperature measurement value to be measured by a contact thermometer included in a temperature measurement device after swapping, and dispersed spectrum information corresponding to the temperature measurement value, from a temperature measurement value measured by a contact thermometer included in a temperature measurement device before swapping and dispersed spectrum information corresponding to the temperature measurement value, using dispersed spectrum information of radiation energy from a black body furnace and dark current data measured with the temperature measurement device before swapping and with the temperature measurement device after swapping, at each of a plurality of different temperatures; and determine, using information thus generated, the basis spectrum and the calibration line for the temperature measurement device after swapping.

4. The calibration device for a temperature measurement device according to claim 3, wherein the basis spectrum is determined:

by calculating emissivity from a ratio of the dispersed spectrum information of the target object with respect to dispersed spectrum information of radiation energy acquired by making a measurement of the black body furnace at a same temperature as the temperature measurement value measured by the contact thermometer, and determining a spectrum perpendicularly intersecting with a principal component resultant of performing principal component analysis on an emissivity variation that is based on the emissivity, as the basis spectrum; or by applying partial least squares regression to the dispersed spectrum information of the target object, and to the temperature measurement value measured by the contact thermometer.

5. A calibration method for a physical quantity measurement device, the physical quantity measurement device being configured to measure a physical quantity of a target object by measuring radiation energy emitted from the target object using spectroscopy and applying signal processing to dispersed spectrum information thus acquired, where the physical quantity is measured by calculating a score of a basis spectrum acquired in advance based on the dispersed spectrum information acquired from the target object, and using the score with a calibration line acquired in advance, and the basis spectrum and the calibration line are determined based on a physical quantity measurement value of the target object that is measured with another method, the calibration method comprising steps of:

measuring dispersed spectrum information of a target object serving as a reference of calibration and dark current data with a physical quantity measurement device before swapping and with a swapping physical quantity measurement device after swapping, at each of a plurality of different physical quantities; generating, using information thus measured, a physical quantity measurement value and dispersed spectrum information corresponding to the physical quantity measurement value for the physical quantity measurement device after swapping, from a physical quantity measurement value measured by the physical quantity measurement device before swapping and dispersed spectrum information corresponding to the physical quantity measurement value; and determining, using information thus generated, the basis spectrum and the calibration line for the physical quantity measurement device after swapping.

6. The calibration method for a physical quantity measurement device according to claim 5, wherein the basis spectrum is determined:

by determining a spectrum perpendicularly intersecting with a principal component resultant of performing principal component analysis on the dispersed spectrum information of the target object, on the physical quantity measurement value, and on dispersed spectrum information of the object serving as a reference of calibration, as the basis spectrum; or

by applying partial least squares regression to the dispersed spectrum information of the target object, and to the physical quantity measurement value.

7. A calibration device for a physical quantity measurement device, the physical quantity measurement device being configured to measure a physical quantity of a target object by measuring radiation energy emitted from the target object using spectroscopy and applying signal processing to dispersed spectrum information thus acquired, where the physical quantity is measured by calculating a score of a basis spectrum acquired in advance based on the dispersed spectrum information acquired from the target object, and using the score with a calibration line acquired in advance, and the basis spectrum and the calibration line are determined based on a physical quantity measurement value of the target object that is measured with another method, the calibration device comprising a unit configured to:

measure dispersed spectrum information of a target object serving as a reference of calibration and dark current data with a physical quantity measurement device before swapping and with a physical quantity measurement device after swapping, at each of a plurality of different physical quantities;

generate, using information thus measured, a physical quantity measurement value and dispersed spectrum information corresponding to the physical quantity measurement value for the swapping physical quantity measurement device after swapping, from a physical quantity measurement value measured by the physical quantity measurement device before swapping, and dispersed spectrum information corresponding to the physical quantity measurement value; and

determine, using information thus generated, the basis spectrum and the calibration line for the physical quantity measurement device after swapping.

8. The calibration device for a physical quantity measurement device according to claim 7, wherein the basis spectrum is determined:

by determining a spectrum perpendicularly intersecting with a principal component resultant of performing principal component analysis on the dispersed spectrum information of the target object, on the physical quantity measurement value, and on the dispersed spectrum information of the object serving as a reference of calibration, as the basis spectrum; or

by applying partial least squares regression to the dispersed spectrum information of the target object and to the physical quantity measurement value.

# FIG.1

# FIG.2

# FIG.3A

# FIG.3B

# FIG.4

# FIG.5A

# FIG.5B

# FIG.6

# FIG.7

# FIG.8

Legend:
— 800℃ (WITH HIGH EMISSIVITY)
- - - 800℃ (WITH ASSUMED EMISSIVITY)
– – 800℃ (WITH LOW EMISSIVITY)
····· 750℃ (WITH ASSUMED EMISSIVITY)

ENERGY vs WAVELENGTH [$\mu$m]

# FIG.9

$y = 4.1313x^2 - 19.876x + 440.53$

TEMPERATURE [℃] vs SCORE FOR FIRST PRINCIPAL COMPONENT

# FIG.10A

# FIG.10B

# FIG.11

1 TEMPERATURE
MEASUREMENT DEVICE

40

AIR
CYLIN-
DER

3

REGRES-
SION
EQUATION
CREATING
UNIT

4

TEMPERA-
TURE ESTI-
MATING
UNIT

w(i,k),c(k)

30

CONTACT
THERMOMETER

2

FTIR (FOURIER
TRANSFORM
INFRARED
SPECTROMETER)

5

STEEL PLATE
(AT TIME WHEN IT IS TO BE MEASURED)

# FIG.12

INTERFEROMETER
18

MIRROR
11

2
FTIR

5
STEEL
PLATE

MOVABLE
MIRROR
13

HALF
MIRROR
12

MIRROR
15

DETECTOR
17

16
MIRROR

14
MIRROR

# FIG.13

# FIG.14

REGRESSION
EQUATION CREATING
PROCESS

ACQUIRE DISPERSED SPECTRUM
INFORMATION FOR CREATING
CALIBRATION LINE ~S1

PERFORM LOGARITHMIC OPERATION ~S2

PERFORM PRINCIPAL COMPONENT ANALYSIS ~S3

EXTRACT BASES AND SCORES ~S4

PERFORM MULTIPLE REGRESSION ANALYSIS ~S5

END

# FIG.15

```
        ┌─────────────────────┐
        │    TEMPERATURE      │
        │    ESTIMATING       │
        │     PROCESS         │
        └─────────────────────┘
                  │
                  ▼
     ┌──────────────────────────┐
     │   ACQUIRE DISPERSED      │  ～S11
     │ SPECTRUM INFORMATION     │
     └──────────────────────────┘
                  │
                  ▼
     ┌──────────────────────────┐
     │ PERFORM LOGARITHMIC OPERATION │  ～S12
     └──────────────────────────┘
                  │
                  ▼
     ┌──────────────────────────┐
     │    CALCULATE SCORES      │  ～S13
     │   FOR TARGET OBJECT      │
     └──────────────────────────┘
                  │
                  ▼
     ┌──────────────────────────┐
     │ PERFORM REGRESSION OPERATION │  ～S14
     └──────────────────────────┘
                  │
                  ▼
        ┌─────────────────────┐
        │         END         │
        └─────────────────────┘
```

# FIG.16

# FIG.17

# FIG.18

TEMPERATURE
MEASUREMENT
DEVICE /1

CALIBRATION
DEVICE /50

# FIG.19

LUMINANCE

WAVELENGTH

# FIG.20

WAVELENGTH

# FIG.21

$y=2.5923x^2-27.452x+616.45$
$R^2=1$

$y=0.355x^2-10.292x+650.91$
$R^2=0.9998$

L2

L1

SCORE

# FIG.22

## INTERNATIONAL SEARCH REPORT

| International application No. |
| --- |
| PCT/JP2019/036129 |

**A. CLASSIFICATION OF SUBJECT MATTER**
Int.Cl. G01J5/00(2006.01)i, G01J5/60(2006.01)i

According to International Patent Classification (IPC) or to both national classification and IPC

**B. FIELDS SEARCHED**

Minimum documentation searched (classification system followed by classification symbols)
Int.Cl. G01J5/00-5/62, G01N21/00-21/61, G01B11/00-11/30

Documentation searched other than minimum documentation to the extent that such documents are included in the fields searched
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2013-221788 A (JFE STEEL CORPORATION) 28 October 2013 <br> & WO 2013/153876 A1 & KR 10-2014-0126767 A & CN 104204744 A | 1-8 |
| A | JP 2013-127378 A (JFE STEEL CORPORATION) 27 June 2013 <br> (Family: none) | 1-8 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25.11.2019 | 03.12.2019 |

| Name and mailing address of the ISA/ <br> Japan Patent Office <br> 3-4-3, Kasumigaseki, Chiyoda-ku, <br> Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2019/036129

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-234984 A (JFE STEEL CORPORATION) 21 November 2013 (Family: none) | 1-8 |
| A | JP 2014-169935 A (JFE STEEL CORPORATION) 18 September 2014 (Family: none) | 1-8 |
| A | JP 2013-170946 A (TOYOTA MOTOR CORPORATION) 02 September 2013 (Family: none) | 1-8 |
| A | US 2015/0124244 A1 (UT-BATTELLE, LLC) 07 May 2015 (Family: none) | 1-8 |
| A | JP 2012-8062 A (JFE STEEL CORPORATION) 12 January 2012 (Family: none) | 1-8 |
| A | JP 2014-134527 A (OH'TEC ELECTRONICS CORP.) 24 July 2014 (Family: none) | 1-8 |
| A | JP 2012-142920 A (CANON INC.) 26 July 2012 & US 2012/0150471 A1 & US 2013/0128098 A1 | 1-8 |

Form PCT/ISA/210 (continuation of second sheet) (January 2015)

## REFERENCES CITED IN THE DESCRIPTION

**Patent documents cited in the description**

- JP 2013234984 A
- JP 2013221788 A
- JP 2014169935 A